# EUROPEAN PATENT APPLICATION

(11) **EP 0 916 598 A1**
(43) Date of publication of application: **19.05.1999**
(21) Application number: 98203682.4
(22) Date of filing: 31.10.1998
(51) Int. Cl.: B65G 17/08

(54) **A chain conveyor for transporting products along a predetermined axis**

(30) Priority: 18.11.1997 IT MI972561
(71) Applicant: Rexnord Marbett S.p.A., 42015 Correggio (Reggio Emilia) (IT)
(72) Inventor: Tralli, Gabriele, 41030 Fossa di Concordia, Modena (IT); Mondello, Piero, 21020 Buguggiate, Varese (IT)
(74) Representative: De Nova, Roberto

(57) **Abstract**

A chain conveyor (1) for transporting products (2) along a predetermined axis (X-X), which is strong and at the same time has an excellent surface for supporting the products to be transported, comprises a plurality of wide links (3,6) each of which comprises eyes (8) disposed at regular intervals (P) in a staggered arrangement on opposite sides and inserted in the manner of a comb between eyes (8) of adjacent links (3,6), a platform (10) for supporting the products (2) to be transported, and a recess (15,16) extending through the links (3,6) along the transportation axis (X-X), beneath the platform (10), for housing a metal reinforcing link (19).

## Description

The present invention relates to a chain conveyor for transporting products along a predetermined axis, of the type comprising a plurality of wide links each having eyes disposed at regular intervals in an offset arrangement on opposite sides and inserted in the manner of a comb between eyes of adjacent links, each wide link having a platform for supporting the products to be transported, the conveyor also comprising a plurality of narrow reinforcing links.

As is known, in chain conveyors of the type specified, the links are made of a suitable plastics material which is satisfactory from various points of view but leaves something to be desired from the point of view of its mechanical strength.

In order to confer the necessary strength on the chain conveyor, suitable narrow metal reinforcing links are usually placed beside the wide links of plastics material. In practice, in chain conveyors according to the prior art, the wide links thus have the function of offering a support surface to the products to be transported, whilst the narrow metal reinforcing links have the function of conferring the necessary strength on the chain conveyor as a whole.

Although this solution is generally satisfactory and is widely used, it leaves something to be desired from the point of view of its functionality. The narrow reinforcing links in fact interrupt the continuity of the surface for supporting the products to be transported, or offer a support surface which does not have the optimal characteristics of wide links of plastics material.

The problem upon which the present invention is based is that of providing a conveyor of the type specified which has structural and functional characteristics such as to overcome the aforementioned disadvantage.

This problem is solved by a chain conveyor of the type specified which is characterized in that the wide links comprise at least one recess extending through the links along the transportation axis, beneath the platform, for housing a narrow reinforcing link.

Further characteristics and the advantages of the chain conveyor according to the present invention will become clear from the following description of a preferred embodiment thereof, given by way of non-limiting example with reference to the appended drawings, in which:

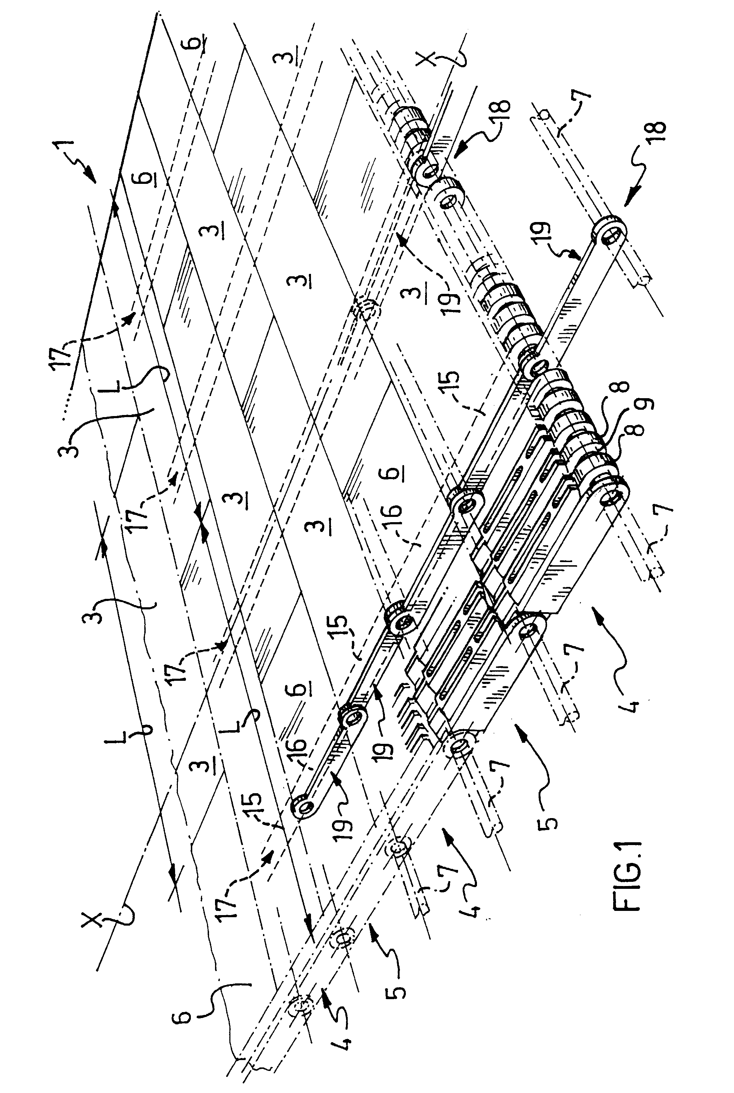

Figure 1 is a perspective view of a chain conveyor according to the present invention,

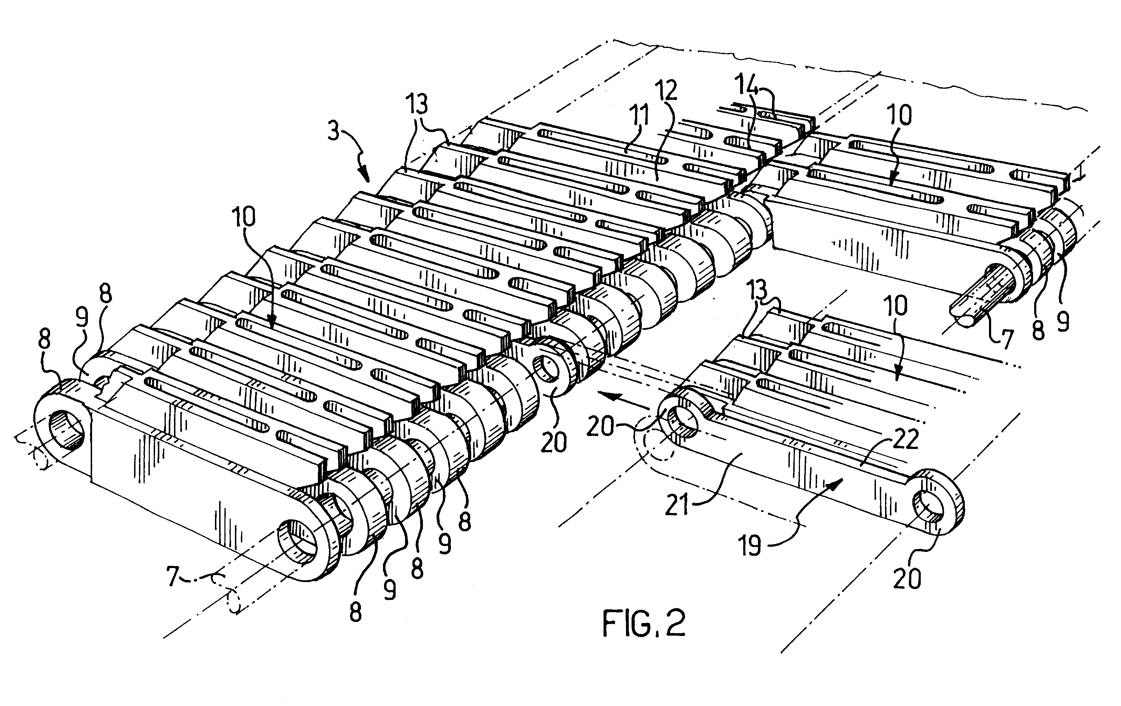

Figure 2 is a perspective view of a detail of the chain conveyor of Figure 1, on an enlarged scale and with parts separated,

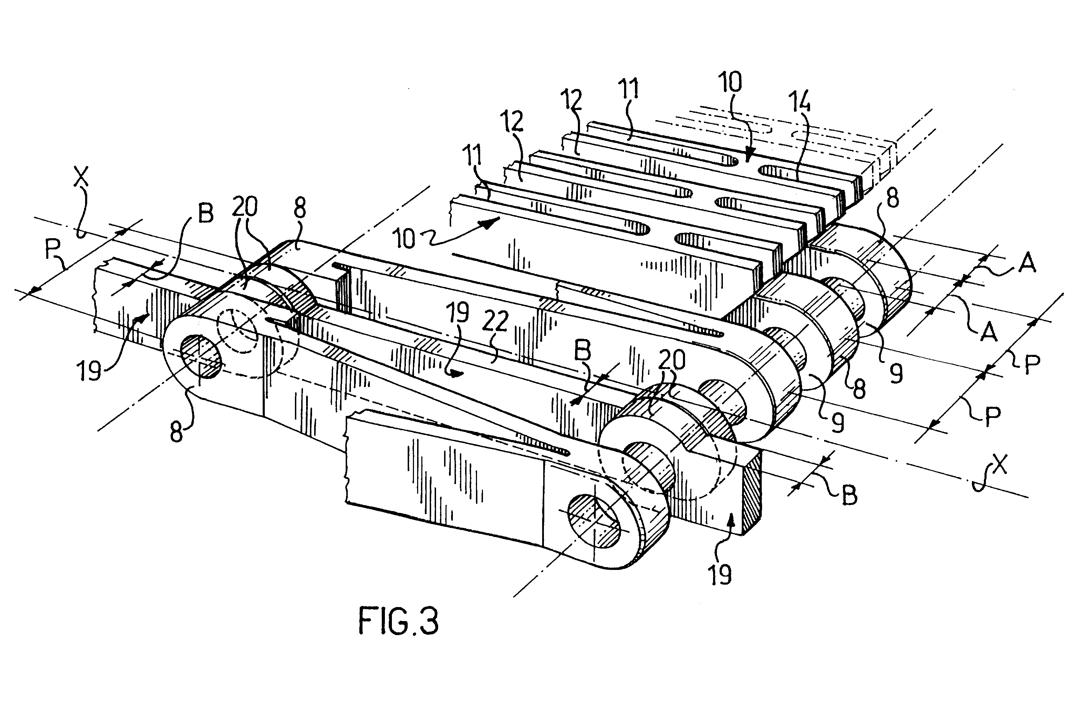

Figure 3 is a perspective view of a detail of the chain conveyor of Figure 1 on a further enlarged scale,

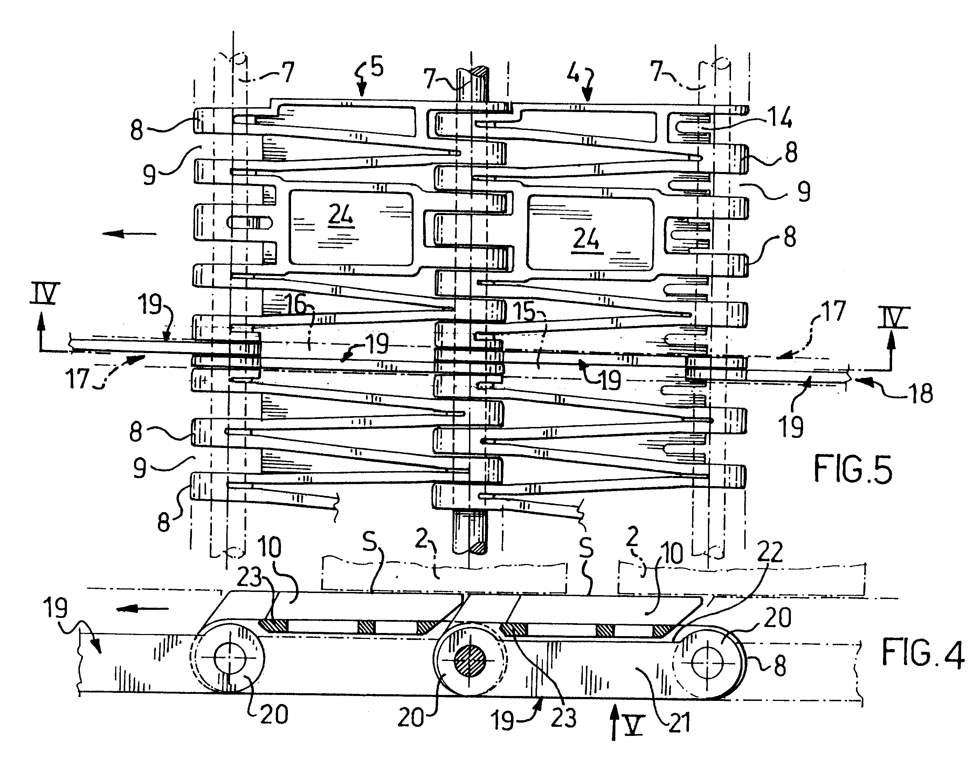

Figure 4 is a longitudinal section of the chain conveyor of Figure 1, taken on the line IV-IV, and
Figure 5 is a view of the chain conveyor of Figure 1 from below, taken on the arrow V.

With reference to the appended drawings, a chain conveyor, indicated 1, is intended for transporting products 2 along a transportation axis extending longitudinally and indicated X-X.

The conveyor 1 comprises a plurality of wide links 3 in a quincuncial arrangement, that is, arranged like the bricks in a wall.

In particular, in the embodiment illustrated, the chain conveyor 1 includes, alternating along the conveyor, rows 4 comprising two wide links 3 of predetermined width L side by side and in mutual contact, and rows 5 comprising one wide link 3 in the middle and two wide links 6 of a width L equal to half of the width of the wide link 3, disposed on opposite sides of the wide link 3 and in contact therewith. The chain conveyor 1 thus has, throughout its length, a uniform width equal to twice the width L of a wide link 3.

The links 3 and the links 6 of adjacent rows in the conveyor are articulated to one another by means of pins, all indicated 7, which are made of metal, preferably stainless steel. For this purpose, the links 3 and 6 have, on opposite sides, eyes 8 which are arranged at regular intervals, indicated P, and are offset on the opposite sides. Preferably, the eyes 8 have a width equal to one half-interval and are engaged in the manner of a comb between the eyes of the adjacent links, each eye 8 engaging a space 9 formed between two corresponding eyes of an adjacent link and having a width equal to one half interval.

The links 3 and the links 6 bear respective platforms, all indicated 10, which are disposed at a predetermined level above the eyes 8 and the spaces 9 and which define a surface S for supporting the products 2 to be transported.

In the embodiment illustrated, the platforms 10 have slots 11 and through channels 12 extending longitudinally substantially in order to reduce weight, as well as opposed and matching projections 13 and recesses 14 for ensuring the continuity of the surface for supporting the products 2 between links along the transportation axis, in conventional manner.

The links 3 and 6 are made of a suitable plastics material, for example, polypropylene, and are preferably produced by injection moulding.

In the chain conveyor 1 according to the invention, two recesses, both indicated 15, are formed in each wide link 3, preferably during the production of the link itself by injection moulding, the recesses 15 being disposed beneath the platform 10, having a width equal to one half interval P, extending through the link along the transportation axis X-X, and being spaced from the ends of the link by the same distance, this distance being equal to one quarter of the width L of the link.

In the embodiment shown, the interval P and the width L are selected in a manner such that each recess 15 extends in a space 9 at one side of the link.

With regard to the wide links 6, a recess 16 exactly the same as the recess 15 is formed in each link 6 and is disposed in the middle of the width of the link.

At this point it will be understood that the recesses 15 and 16 of the links 3 and 6, which are aligned along the transportation axis X-X, together form along the chain conveyor 1 according to the invention continuous channels 17 of which there are four in the embodiment illustrated, extending along the transportation axis X-X for housing respective reinforcing chains 18. Each reinforcing chain 18 is formed by narrow reinforcing links, all indicated 19, made of metal, preferably of stainless steel, articulated to one another by the pins 7, and each being of a limited width, indicated B, equal to one quarter of the interval P.

It should be noted that each reinforcing link 19 is in the form of a link rod and has opposed eyes, both indicated 20, and a central portion, indicated 21, connecting the eyes. The central connecting portion 21 advantageously has, on the side facing the platform, a depression 22 advantageously occupied by a lower portion 23 of the platform 10 strengthening the platform which thus has an increased thickness.

The opposite sides of the links 3 and 6 to the support surface S have recesses 24 for housing teeth of at least one drive gear of the chain conveyor, which is not shown in the drawing because it is conventional.

In operation, the products 2 to be transported are supported on the platforms 10 which follow one another in continuous succession in the longitudinal direction and are disposed side by side in mutual contact with continuity adjacent one another across the width of the conveyor, thus providing the desired uniformity of the surface S for supporting the products to be transported.

The main advantage of the chain conveyor according to the present invention lies in its strength, which is achieved whilst a surface of excellent quality is provided for supporting the products to be transported.

A further advantage of the conveyor according to the present invention is that it can be produced with links in a quincuncial arrangement.

Naturally, in order to satisfy contingent and specific requirements, an expert in the art may apply to the above-described chain conveyor many modifications and variations all of which, however, are included within the scope of protection of the invention as defined by the following claims.

## Claims

1. A chain conveyor (1) for transporting products (2) along a predetermined axis (X-X), of the type comprising a plurality of wide links (3) each having eyes (8) disposed at regular intervals (P) in an offset arrangement on opposite sides and inserted in the manner of a comb between eyes (8) of adjacent links (3), each wide link (3,6) having a platform (10) for supporting the products (2) to be transported, the conveyor (1) also comprising a plurality of narrow reinforcing links (19), characterized in that the wide links (3,6) comprise at least one recess (15) extending through the links (3), along the transportation axis (X-X), beneath the platform (10), for housing a narrow reinforcing link (19).

2. A chain conveyor (1) according to Claim 1, characterized in that the recess (15,16) has a width equal to one half interval (P) in order to house narrow links (19) having a width (B) equal to one quarter interval (P).

3. A chain conveyor (1) according to Claim 2, characterized in that each wide link (3) comprises within its width (L) two recesses (15) spaced from the ends of the link (3) by a distance equal to one quarter of the said width (L) .

4. A chain conveyor (1) according to Claim 3, characterized in that it comprises second wide links (6) of a width equal to one half of the width (L) of the first wide links (3), each of the second wide links (6) comprising a recess (16) disposed in the middle of its width for housing a narrow reinforcing link (19) when the first links (3) are in a quincuncial arrangement.

5. A chain conveyor (1) according to Claim 1, characterized in that each narrow reinforcing link (19) comprises two eyes (20), a central portion (21) connecting the eyes (20) and a depression (22) in the central connecting portion (21) on the side facing the platform (10).
